# FASCICULE DE BREVET EUROPEEN

(11) **EP 2 641 505 B1**
(45) Date de publication et mention de la délivrance du brevet: **29.07.2015**
(21) Numéro de dépôt: 13156969.1
(22) Date de dépôt: 27.02.2013
(51) Int. Cl.: A47B 47/04, F16B 12/12, F16B 12/24

(54) **Caisson de meuble**
Möbelstückkorpus
Furniture carcasse

(30) Priorité: 21.03.2012 FR 1252545; 21.12.2012 FR 1262578
(43) Date de publication de la demande: 25.09.2013
(73) Titulaire: Inovame, 67310 Wasselonne (FR)
(72) Inventeur: Miclo, Thierry, 67300 Schiltigheim (FR); Fendenheim, Jacky, 67230 Kertzfeld (FR); Lanoux, Marie-Elisabeth, 67190 Dinsheim-sur-Bruche (FR)
(74) Mandataire: Cabinet HERRBURGER

(56) Documents cités:
- US-A- 4 047 777
- US-A- 6 045 290
- US-A1- 2004 128 934
- US-A1- 2004 253 051

## Description

### Domaine de l'invention

La présente invention se rapporte à un caisson de meuble formé de panneaux assemblés bord à bord selon un assemblage à rainure et languette bâtarde dans lequel, - un premier et un second panneau sont assemblés par le chant du premier panneau venant contre le bord intérieur du deuxième panneau formant ainsi un dièdre, le premier panneau ayant une première orientation et le second panneau ayant une seconde orientation dans le plan perpendiculaire à la direction de l'arête du dièdre formé par l'assemblage.

### Etat de la technique

Les caissons de meuble sont formés par l'assemblage de panneaux, en général bord à bord.

Les moyens d'assemblage de panneaux sont très diverses allant de formes d'assemblages complexes utilisées en menuiserie jusqu'à un assemblage plus simple bord à bord, collé et renforcé le cas échéant par des pointes et des agrafes. Les assemblages collés bord à bord utilisent souvent des éléments intercalaires, tels que des languettes (voir par exemple US 4047777A), des lamelles, placées dans deux rainures complémentaires et assemblées collées, (par exemple des lamelles de forme elliptique ou rectangulaire diffusées sous la marque "Lamello").

Mais ces modes d'assemblage nécessitent un savoir-faire pour réussir un bon assemblage.

### But de l'invention

La présente invention a pour but de développer un caisson de meuble formé par l'assemblage de panneaux et dont la réalisation de l'assemblage aux coins du caisson, puisse se faire de manière simple, avec un résultat garanti et sans nécessiter de connaissances particulières dans le domaine de la menuiserie.

### Exposé et avantages de l'invention

A cet effet l'invention a pour objet un caisson de meuble du type défini ci-dessus, caractérisé en ce que - le premier panneau comporte sur son chant, en bordure de son côté intérieur, une languette bâtarde d'assemblage, laissant une surface d'appui de chant avancée, et une rainure de verrouillage à la base de la languette le long du bord intérieur de ce panneau,
- le second panneau comporte le long de son bord intérieur un logement de forme complémentaire à celle du chant du premier panneau avec d'une part une rainure d'assemblage, longitudinale, de forme complémentaire à celle de la languette, et d'autre part une surface d'appui extérieure au-delà de la rainure et en retrait par rapport au plan du côté intérieur du panneau pour recevoir la surface d'appui de chant de l'autre panneau,
- une rainure de verrouillage dans le second panneau débouchant dans le logement d'assemblage dans une position complémentaire à celle de la rainure de verrouillage du premier panneau lorsque les deux panneaux sont assemblés, la languette bâtarde du premier panneau venant dans le logement d'assemblage du second panneau et la surface d'appui de chant avancée du premier panneau étant appliquée contre la surface d'appui extérieure en retrait du deuxième panneau, les rainures de verrouillage se complétant pour former un canal recevant une languette de verrouillage, la réunion de la languette bâtarde et de la rainure d'assemblage assurant le blocage dans la seconde direction et la languette de verrouillage bloquant l'assemblage dans la première direction.

Le caisson de meuble selon l'invention s'assemble d'une manière particulièrement simple puisqu'il suffit de réunir les différents panneaux, par exemple les quatre panneaux constituant le caisson parallélépipédique. Le caisson selon l'invention ne nécessite aucun accessoire d'assemblage dit de quincaillerie, tel que vis, tourillon, excentrique qui compliquent le conditionnement et la préparation en usine et aussi l'assemblage par le client qui, en principe, n'est pas un spécialiste des techniques d'assemblage en menuiserie.

En revanche selon l'invention l'assemblage se fait par simple emboîtage, aussi les angles d'assemblage (par exemple 90°) sont garantis du fait de la simple réunion des panneaux. En cas d'erreur d'alignement le long de la ligne d'assemblage, la réunion des panneaux peut être éventuellement corrigée, de manière très simple de façon que les faces avant et les faces arrière des panneaux soient parfaitement alignées.

Puis, il suffit de verrouiller les assemblages en introduisant la languette de verrouillage dans le canal formé par la réunion des deux rainures de verrouillage au niveau de chaque coin d'assemblage.

Si le caisson comporte un fond logé dans une rainure réalisée près du bord arrière de chacun des panneaux, l'assemblage est encore plus simple puisque les panneaux sont guidés dans leur assemblage également par le fond du caisson, engagé dans les rainures.

L'introduction des languettes de verrouillage dans le caisson ainsi assemblé avec son fond, termine l'ensemble.

Dans le cas d'un caisson avec un fond logé dans une feuillure réalisée le long du bord arrière des panneaux, l'assemblage se fait tout aussi simplement en réunissant les panneaux, puis en verrouillant leur assemblage pour ensuite mettre en place le fond dans la feuillure et qui couvre les extrémités des languettes de verrouillage.

Suivant une caractéristique avantageuse, les rainures de verrouillage débouchent sur un côté seulement des panneaux. Les rainures de verrouillage débouchent de préférence du côté arrière des panneaux, c'est-à-dire de l'arrière du caisson de sorte que la face avant du caisson ne laisse apparaître que la ligne de jonction entre la languette bâtarde et son logement sans faire apparaître le canal formé par la réunion des deux rainures de verrouillage au niveau de chaque coin. L'aspect du meuble en façade est de ce fait net.

Toutefois, suivant une caractéristique avantageuse, si pour des raisons d'esthétique, l'apparition du débouché du canal en face avant, est voulue, les rainures de verrouillage peuvent occuper toute la longueur du bord des panneaux et déboucher sur le côté avant. Le canal peut également recevoir dans ce cas un élément décoratif qui souligne le coin du meuble en façade.

Dans ce cas, la languette de verrouillage pourra avoir une longueur supérieure à la longueur du canal si elle doit dépasser à l'avant ou une longueur inférieure à la longueur du canal pour laisser le canal déboucher librement en face avant et recevoir éventuellement un élément de fixation, tel qu'une broche, à l'arrière d'un élément décorant la face avant du caisson.

Suivant une autre caractéristique avantageuse, les rainures de verrouillage ont une section rectangulaire et la languette de verrouillage a une section rectangulaire égale, au jeu près, à celle du canal formé par la réunion des deux rainures de verrouillage.

La languette est ainsi engagée étroitement dans le canal et renforce l'assemblage en le verrouillant et en compensant un éventuel jeu.

Suivant une autre caractéristique avantageuse, la languette de verrouillage se termine à l'arrière par une patte formant un appui ou une butée de fin de course d'engagement de la languette dans le canal. Cette patte facilite l'introduction de la languette dans le canal surtout si la section de la languette est adaptée étroitement à celle du canal en augmentant ainsi la surface d'appui.

Suivant une autre caractéristique avantageuse, les rainures de verrouillage sont de section rectangulaire et la languette de verrouillage a une section au plus égale, au jeu près, à celle d'une rainure pour être placée dans cette rainure avant l'assemblage des panneaux sans dépasser de la rainure pour être ensuite poussée à cheval de la jonction des deux rainures lorsque l'assemblage des panneaux est terminé de façon à verrouiller leur assemblage.

Cette languette peut être placée dans la rainure de verrouillage après la fabrication du panneau de sorte que les panneaux d'un caisson de meuble peuvent être conditionnés et emballés sans se préoccuper des languettes de verrouillage que l'utilisateur final trouvera ainsi déjà installées. Il suffira après l'assemblage des panneaux, de repousser chaque languette de verrouillage pour la faire également pénétrer dans l'autre rainure formant le canal. Ce mouvement peut se faire simplement à l'aide d'une tige glissée dans la rainure. Cette forme de réalisation a l'avantage de garantir que la languette de verrouillage occupe toute la longueur de la rainure et qu'elle ne risque pas de se bloquer avant d'atteindre l'extrémité du canal, au cas où une aspérité constituerait un obstacle accidentel à la progression de la languette le long du canal.

Suivant une autre caractéristique avantageuse, dans le cas d'un caisson muni d'un fond logé dans une rainure périphérique réalisée près du bord de chacun des panneaux, le fond comporte une découpe près de ses coins pour laisser dégagé le canal formé par les rainures.

Cette réalisation permet d'adapter étroitement les dimensions du fond aux dimensions en hauteur et en largeur de l'emplacement défini par les rainures périphériques destinées à le recevoir, de manière à ce que le fond soit adapté étroitement à la dimension de la forme définie par les rainures.

Suivant une caractéristique particulièrement avantageuse, la languette de verrouillage est terminée par un organe de verrouillage accroché à l'extrémité du dièdre du caisson formé par l'assemblage de deux panneaux en s'appuyant sur le chant et en se logeant dans la rainure des panneaux recevant les bords du fond pour immobiliser la languette de verrouillage. Cet organe de verrouillage permet de caler la languette de verrouillage et d'éviter que celle-ci ne dépasse de l'arrière du caisson sous l'effet des mouvements de vibration ou autres auxquels le caisson peut être soumis. L'organe de verrouillage a également l'avantage de caler le fond dans la rainure périphérique des parois pour éviter une éventuelle vibration du fond.

Cette languette de verrouillage munie d'un tel organe de verrouillage s'installe simplement par une légère déformation de l'organe de verrouillage par rapport à la languette pour le faire passer sur le côté intérieur des surfaces du dièdre formé par la jonction des deux panneaux au niveau du coin puis laisser revenir l'organe de verrouillage en appui contre les faces intérieures, contre le dessus du caisson (en général le côté arrière) et dans la rainure périphérique.

Suivant une caractéristique particulièrement avantageuse, l'organe de verrouillage comporte une grande base en forme d'équerre pour s'appuyer à plat sur le chant des panneaux à leur jonction formant le dièdre d'assemblage, cette grande base solidaire de la languette de verrouillage étant prolongée par une partie de liaison en forme de dièdre venant se caler contre la face intérieure de la jonction en forme de dièdre des panneaux et portant une petite base avec des lamelles d'accrochage, en saillie, venant dans la rainure périphérique recevant les bords du fond. Cette forme de réalisation de l'organe de verrouillage assure un excellent calage de cet organe contre le côté intérieur des deux panneaux à leur jonction.

Suivant une autre caractéristique avantageuse, la petite base de forme triangulaire forme un fond dans l'intérieur du dièdre de la partie de liaison et comporte une encoche de manoeuvre. Cette encoche permet d'introduire l'extrémité d'un outil formant levier tel que l'extrémité d'un tournevis dans l'encoche pour légèrement basculer ou déformer la petite base de l'organe de verrouillage et extraire les lamelles de verrouillage de la rainure périphérique des deux panneaux pour ensuite tirer facilement l'organe de verrouillage avec la languette de verrouillage.

Bien que cette extraction soit alors simple, elle ne détériore en rien l'excellent accrochage de l'organe de verrouillage appuyé sur le chant des panneaux et pris dans la rainure recevant les bords du fond du caisson.

Suivant une autre caractéristique avantageuse, la grande base déborde de la partie de liaison en forme de dièdre d'une largeur correspondant à la largeur de la surface d'appui du décrochement réalisé dans le chant des panneaux.

La grande base de l'organe de verrouillage comporte avantageusement une encoche sensiblement au droit de l'encoche de la petite base pour recevoir l'outil formant levier et éviter que celui-ci ne glisse sur le grand côté de la grande base.

Avantageusement, l'organe de verrouillage a une forme symétrique par rapport au plan bi-secteur de la jonction des deux panneaux contre lesquels il s'applique.

Suivant une autre caractéristique avantageuse, la languette de verrouillage est fractionnable pour s'adapter à la profondeur du meuble et en particulier, la languette est subdivisée par des réductions locales de section délimitant des segments, en particulier des segments de longueurs différentes pour ne fabriquer qu'un type de languette et l'adapter à la profondeur des meubles ou caissons par simple enlèvement d'un ou plusieurs segments.

### Dessins

La présente invention sera décrite ci-après à l'aide de modes de réalisation de caissons de meuble selon l'invention représentés dans les dessins annexés dans lesquels :
- la figure 1 montre en coupe un détail de deux panneaux d'assemblage d'un caisson de meuble formé de panneaux, les deux panneaux à réunir étant disjoints,
- la figure 2 montre schématiquement une vue en coupe de l'assemblage de deux panneaux de la figure 1,
- la figure 3, montre dans ses parties A, B un mode de réalisation de la rainure d'assemblage et de la rainure de verrouillage de l'un des panneaux,
   - la figure 3A montre le fraisage de la rainure d'assemblage,
   - la figure 3B montre le fraisage de la rainure de verrouillage,
- la figure 4 montre une vue en perspective d'une languette de verrouillage pour l'assemblage de panneaux selon l'invention,
- la figure 5 montre dans ses parties A, B la comparaison entre l'assemblage selon l'invention et l'assemblage à rainure et languette bâtarde selon l'état de la technique pour faciliter leur comparaison,
   - la figure 5A montre la section de deux panneaux selon l'invention avant leur assemblage,
   - la figure 5B montre à titre de comparaison la forme traditionnelle de l'assemblage à rainure et languette bâtarde.
   - la figure 5C montre un autre type d'assemblage connu,
- la figure 6 montre dans ses parties A, B, C, D, un exemple de caisson selon l'invention en vue de devant.
   - la figure 6A est une vue isométrique de devant du caisson,
   - la figure 6B est une vue de détail de la rainure d'un panneau latéral,
   - la figure 6C montre la forme de la languette bâtarde et de la rainure de verrouillage du panneau inférieur du caisson, côté gauche,
   - la figure 6D est une vue à échelle agrandie du coin droit, bas, du caisson de la figure 6A,
- la figure 7 montre dans ses parties A, B, C, D, un caisson avec sa face arrière correspondant au caisson de la figure 6,
   - la figure 7A est une vue éclatée du caisson avec le panneau de fond,
   - la figure 7B est une vue de détail du coin du panneau de fond, découpé pour le passage de la languette de verrouillage,
   - la figure 7C est une vue de détail d'un coin arrière du panneau inférieur du caisson,
   - la figure 7D est une vue du coin inférieur d'un panneau latéral du caisson,
- la figure 8 montre dans ses parties A, B, C, différentes étapes d'assemblage et de verrouillage du caisson en vue arrière,
   - la figure 8A montre la mise en place du fond dans la rainure du panneau inférieur et le panneau latéral correspondant associé à la languette bâtarde de ce côté du panneau inférieur,
   - la figure 8B montre la mise en place des languettes de verrouillage aux quatre coins du caisson assemblé dont le fond est mis en place dans les rainures périphériques des quatre panneaux,
   - la figure 8C montre à échelle agrandie l'introduction de la languette de verrouillage dans l'un des logements de verrouillage du caisson (coin supérieur gauche, face arrière),
- la figure 9 montre dans ses parties A, B, C, D, un autre mode de réalisation d'un caisson dont le fond est placé dans une feuillure,
   - la figure 9A est une vue éclatée arrière du caisson avec feuillure,
   - la figure 9B est une vue de détail d'un coin du panneau inférieur du caisson montrant la feuillure,
   - la figure 9C est une vue à échelle agrandie du coin inférieur, arrière, d'un panneau latéral montrant la feuillure,
   - la figure 9D montre l'assemblage du panneau de fond dans la feuillure par cloutage ou agrafage,
- la figure 10 est une vue en perspective de l'assemblage de deux panneaux avec la languette de verrouillage munie de l'organe de verrouillage accroché aux deux panneaux,
- la figure 11 montre dans ses parties 11A, 11B la mise en place de la languette de verrouillage dans le canal formé par les deux panneaux,
   - la figure 11A montre la languette de verrouillage engagée dans le canal, l'organe de verrouillage étant encore au-dessus du chant des panneaux assemblés,
   - la figure 11B montre l'étape suivante de l'enfoncement de la lan - guette de verrouillage, l'organe de verrouillage glissant contre le côté intérieur des deux panneaux au niveau de leur assemblage en forme de dièdre,
- la figure 12 est une vue en coupe de dessus selon le plan de coupe I de la figure 10,
- la figure 13 est une vue en coupe de dessus selon le plan de coupe II de la figure 10,
- la figure 14 est une vue de dessus de l'assemblage du coin de la figure 10,
- la figure 15 est une vue de dessous de la languette de verrouillage munie de son organe de verrouillage,
- la figure 16 est une vue isométrique d'une variante de languette de verrouillage munie d'un organe de verrouillage,
- la figure 17 est une vue isométrique d'une partie de languette de verrouillage selon une variante de réalisation.

### Description de modes de réalisation de l'invention

L'invention a pour objet un caisson de meuble formé de panneaux assemblés bord à bord selon un assemblage à rainure et languette bâtarde, ici un caisson parallélépipédique.

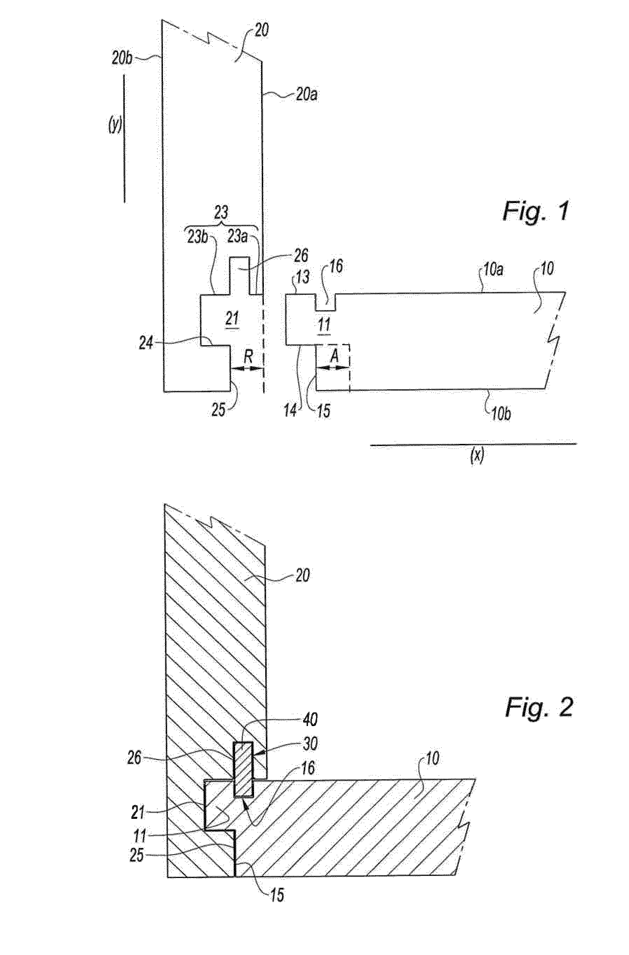

La figure 1 montre la région d'assemblage de deux panneaux 10, 20 selon l'invention représentatif de l'assemblage de quatre panneaux du caisson.

Un caisson est en général formé de quatre côtés, deux côtés latéraux, un dessus, un dessous et un fond. Mais l'invention ne se limite pas à une telle structure parallélépipédique dont les panneaux sont à l'équerre. L'angle entre deux côtés peut être différent de 90° et les panneaux peuvent être assemblés avec des angles à 120° ou à 135° pour des sections octogonales ou hexagonales. De tels caissons peuvent être constitutifs d'un ensemble modulaire ou être des éléments utilisés individuellement. Les caissons peuvent être orientés comme cela est généralement le cas avec les arêtes horizontales, mais aussi avec des arêtes verticales pour former par exemple des piétements de table, notamment de tables basses ou de sièges.

Les panneaux 10, 20 ont une face intérieure 10a, 20a et une face extérieure 10b, 20b.

Le premier panneau 10 comporte une languette bâtarde 11, c'est-à-dire située dans le prolongement du côté intérieur 10a du panneau 10. Cette languette 11 s'étend sur toute la longueur du panneau 10 et forme une surface avant 12 et deux surfaces d'appui latérales 13, 14 dont l'une rejoint une surface d'appui de chant 15. Le côté intérieur 100 du premier panneau 10, à la base de la languette bâtarde 11, comporte une rainure de verrouillage 16 parallèle au chant.

Le second panneau 20 comporte près de son bord, sur le côté intérieur 20a, un logement ou découpe de forme complémentaire à celle du chant du premier panneau, c'est-à-dire un logement formant la rainure d'assemblage 21 destinée à recevoir la languette bâtarde 11 et au-delà de la rainure d'assemblage, une surface d'appui intérieure 25.

La rainure d'assemblage 21 est bordée d'une grande surface 23 d'appui formé de deux parties 23a, 23b et d'une petite surface d'appui 24.

La grande surface d'appui 23 est munie d'une rainure de verrouillage 26 dans une position homologue à celle de la rainure de verrouillage 16 du premier panneau 10 lorsque les deux panneaux 10, 20 sont réunis, la languette bâtarde 11 étant introduite à fond dans la rainure d'assemblage 21 et la surface d'appui de chant 15 du premier panneau 10 venant contre la surface d'appui intérieure 25 du second panneau 20.

Dans cette position assemblée représentée à la figure 2, les deux rainures de verrouillage 16, 26 se rejoignent et forment un canal 30 parallèle à l'axe d'assemblage et recevant une languette de verrouillage 40.

Les rainures de verrouillage 16, 26 des deux panneaux 10, 20 sont de préférence arrêtées juste avant l'extrémité des deux panneaux 10, 20, mais débouchant par l'autre extrémité des panneaux. Cela permet d'introduire une languette de verrouillage 40 mais évite que celle-ci ne dépasse d'un côté de l'assemblage (celui en-dessous du plan de la figure 1) de façon que la forme des deux rainures d'assemblage 16, 26 n'apparaît pas sur la tranche des deux panneaux assemblés 10, 20.

Selon les figures 1 et 2, les deux panneaux 10, 20 une fois assemblés forment un dièdre dont l'arête est la direction de l'assemblage.

Pour faciliter la description, le premier panneau 10 a une orientation X et le second panneau 20 a une orientation Y, ces orientations étant prises dans le plan perpendiculaire à l'arête du dièdre formé, qui est ici le plan constitué de la feuille du dessin de la figure 1.

L'assemblage de la languette bâtarde 11 dans la rainure d'assemblage 21 se fait dans la direction Y et le verrouillage de cet assemblage par la languette 40 introduite dans le canal 30 qui est la réunion des deux rainures d'assemblage 16, 26, réalise le verrouillage dans la direction X.

La figure 1 montre également que la surface d'appui intérieure 25 du second panneau 20 est en retrait de la distance R par rapport au plan du côté intérieur 20a du panneau 20. Réciproquement, la surface d'appui de chant 15 du premier panneau 10 est avancée de la distance A de sorte que la languette bâtarde 11 est plus courte que la languette bâtarde connue.

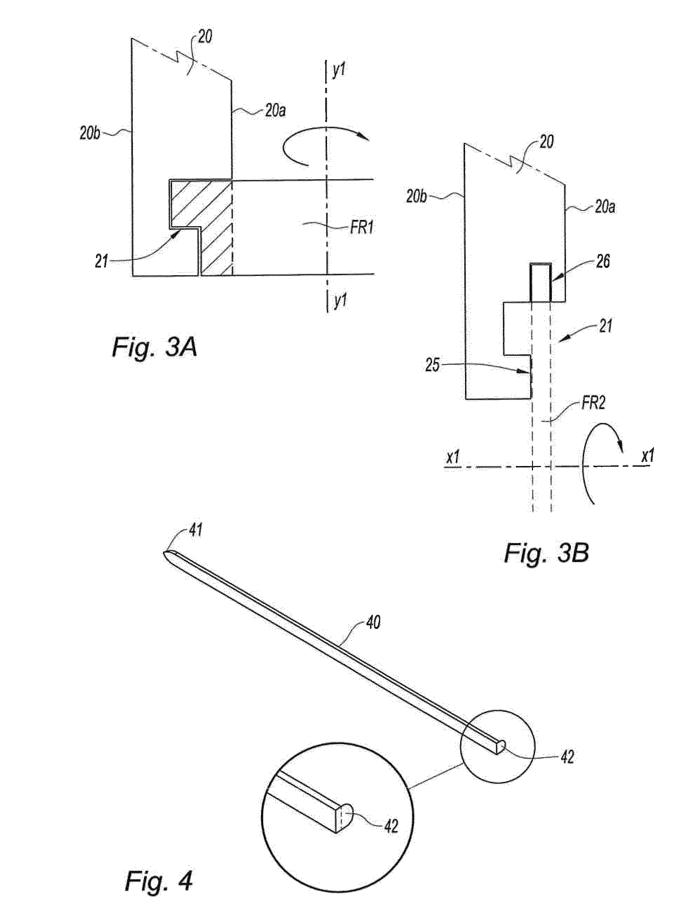

Les figures 3A, 3B montrent schématiquement la réalisation de la structure d'assemblage du panneau 20 et de sa rainure d'assemblage 21 avec sa rainure de verrouillage 26.

Selon ce mode de réalisation, on forme d'abord la rainure d'assemblage 21 avec une fraise FR1 (figure 3A) la fraise tournant autour d'un axe Y1-Y1 parallèle à la direction Y en enlevant également la partie devant la surface d'appui intérieure 25 pour former la partie en retrait.

Ensuite, avec une fraise FR2 tournant autour d'un axe X1-X1 (parallèle à l'axe X-X), on passe la surface d'appui intérieure 25 et on fraise la rainure de verrouillage 26.

La figure 4 montre un exemple de languette de verrouillage 40 de section rectangulaire, d'extrémité avant 41 en pointe et ayant à son extrémité arrière une patte 42 servant d'appui et de butée d'enfoncement. La patte 42 sert également au démontage du caisson pour faciliter l'extraction de la languette.

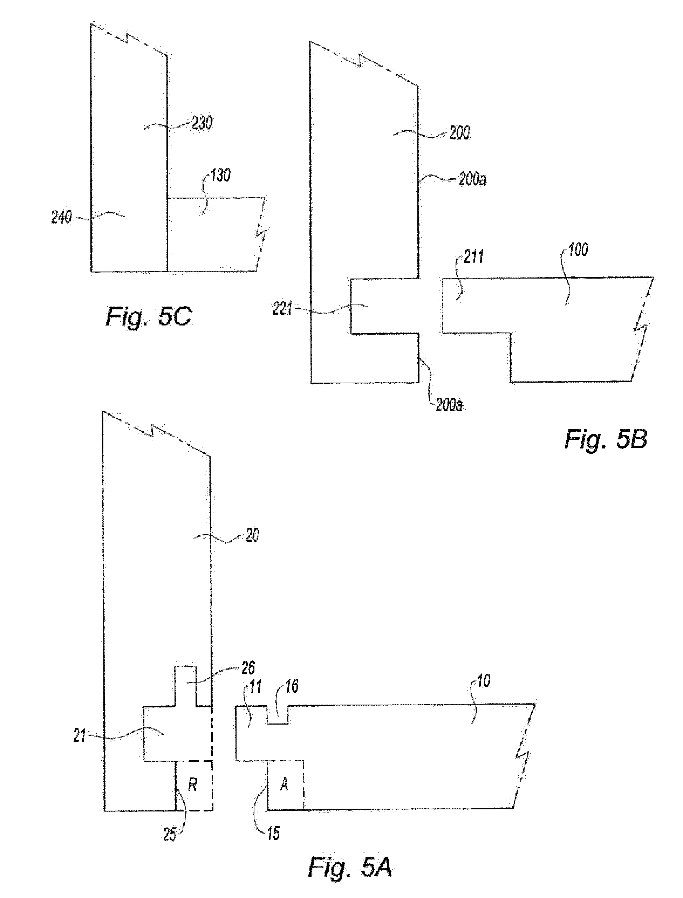

Les figure 5A, 5B de présentation analogue facilitent la comparaison de l'assemblage de l'invention (figure 5A) à l'assemblage connu à rainure et languette bâtarde (figure 5B). Cette comparaison met en évidence les caractéristiques essentielles de l'invention :
- les rainures de verrouillage 16, 26, formant le canal recevant la languette de verrouillage 40,
- les surfaces d'appui 15, 25 dont l'une (15) est avancée (A) et l'autre (25) est en retrait (R).

Dans le cas de l'assemblage à rainure et languette bâtarde connu des panneaux 100, 200, l'un des panneaux (100) a une languette bâtarde 111 longue et l'autre 200 a une rainure 221 profonde puisque le côté intérieur 200a est continu sans retrait et que le chant du panneau 100 n'est pas avancé sur la partie subsistant sous la languette bâtarde 111.

Cette comparaison met en évidence dans l'assemblage de l'invention la forme du logement 21 du second panneau 20 qui ne se limite pas à la seule rainure d'assemblage 21 mais comporte une partie en retrait R devant la surface d'appui intérieure 25. Cette partie en retrait R est reportée sur la languette bâtarde 11 qui est plus courte du fait de l'avancée A de sa surface d'appui de chant 15. La partie en retrait R et la partie avancée A sont mises en évidence par des traits en pointillé.

La figure 5C montre l'assemblage à plat, joint, utilisant des accessoires d'assemblage tels que des vis, des chevilles des tourillons, des excentrique, tous ces accessoires sont schématisés ici par une vis 240 réunissant les panneaux 130, 230. Cet assemblage est complexe à préparer et nécessite les accessoires énoncés ci-dessus.

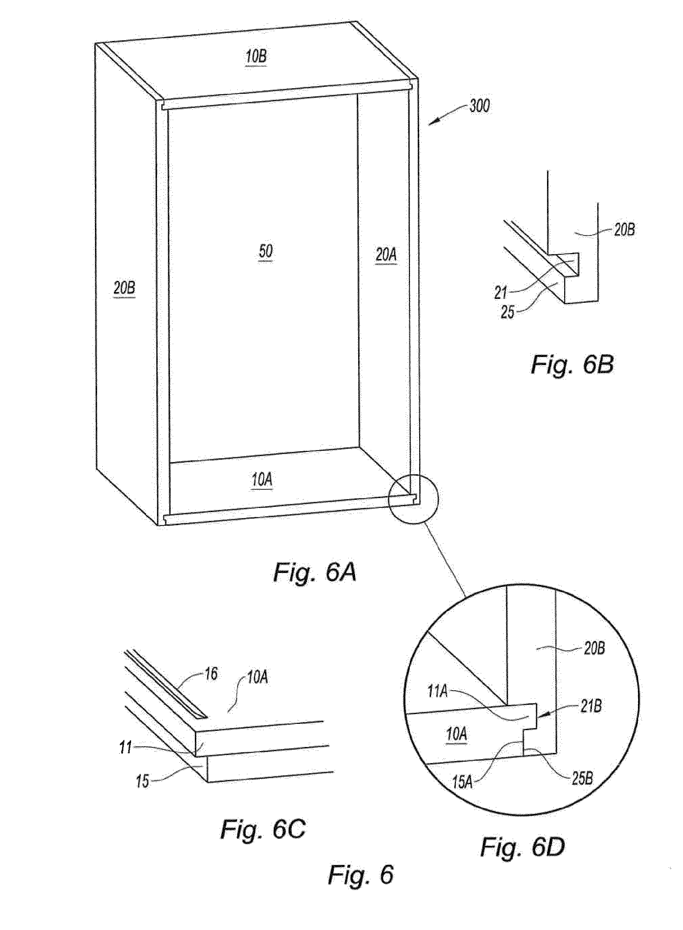

La figure 6 montre un premier mode de réalisation d'un caisson parallélépipédique 300 composé de deux parois latérales 20A, 20B d'une paroi inférieure 10A et d'une paroi supérieure 10B et d'un fond 50. Ces parois sont constituées par des panneaux assemblés par leurs côtés par un assemblage selon l'invention. La vue isométrique de la figure 6A montre la face avant. Les détails de l'assemblage décrits dans leur généralité à l'aide des figures 1 à 5, apparaissent aux figures 6B, 6C, 6D qui montrent des détails de certaines parties de paroi et de l'assemblage sachant que les assemblages des quatre coins du caisson sont réalisés de la même manière.

La disposition générale des parois latérales 20A, 20B et de la paroi inférieure 10A et de la paroi supérieure 10B, correspond aux principes généraux de la construction d'un meuble ou d'un caisson : le fond 10A et le dessus 10B ne rejoignent pas le dessous et le dessus des parois latérales 20A, 20B, mais viennent contre le côté intérieur de ces parois.

De manière détaillée et pour une zone d'assemblage de deux parois la figure 6B montre la rainure d'assemblage 21 de la paroi 20B débouchant à l'avant et laissant apparaître la surface d'appui intérieure 25.

La figure 6C montre un détail d'un côté d'assemblage du panneau 10A constituant la paroi inférieure du caisson 300. Ce côté correspond à la languette bâtarde 11 dont les caractéristiques géométriques sont celles déjà décrites aux figures 1 à 5. Cette figure 6C montre aussi la rainure de verrouillage 16 réalisée à la base de la languette bâtarde 11. Cette rainure 16 se termine avant la face avant du panneau 10A. Elle ne débouche pas dans la face avant, mais uniquement dans la face arrière (non représentée dans cette figure).

La figure 6D montre l'aspect de l'assemblage des deux panneaux 10A, 20B au niveau du coin inférieur droit, ne montrant pas les deux rainures de verrouillage formant le canal de verrouillage n'apparaissant pas à la face avant du caisson.

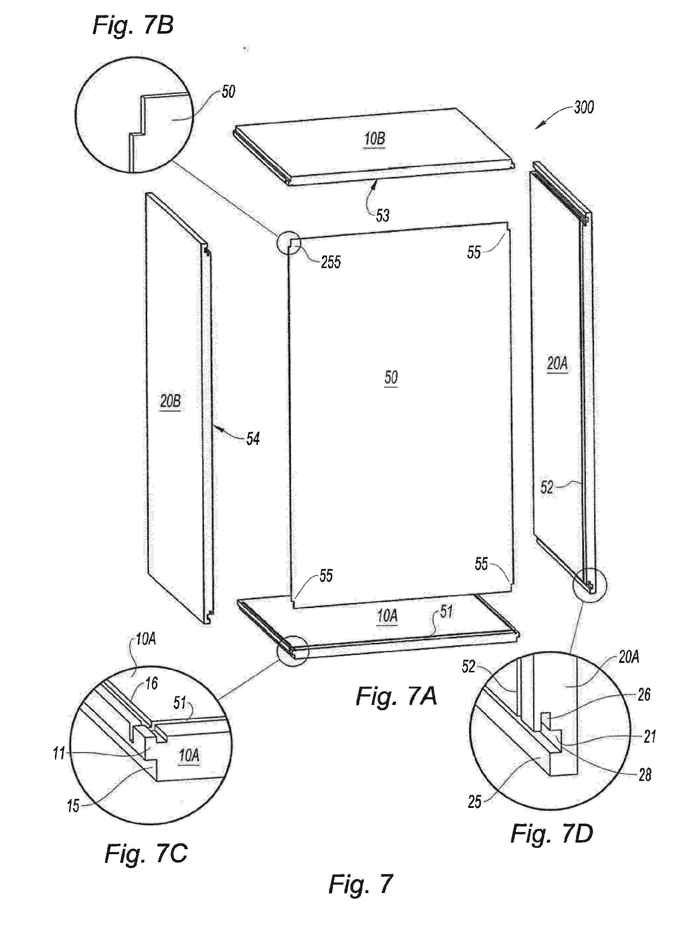

La figure 7 est une vue de la face arrière du caisson 300 qui, dans cet exemple, comporte un fond 50 logé dans des rainures 51-54 réalisées près du bord arrière de chacun des quatre panneaux 10A,B, 20A,B.

La figure 7A est une vue éclatée des quatre panneaux 10A, B, 20A, B constituant le caisson 300 et du panneau de fond 50. Cette vue isométrique laisse apparaître la rainure 51 près du bord arrière du panneau inférieur 10A et la rainure 52 près du bord arrière du panneau latéral droit 20A.

Les autres panneaux 10B, 20B ont des rainures 53, 54 dans la même position de façon à constituer une rainure périphérique qui reçoit le bord du panneau constituant le fond 50, par simple engagement par la forme.

La figure 7B montre l'un des coins découpés 55 du panneau de fond 50 de manière à ce qu'une fois le fond engagé dans les rainures 51-54, le coin 55 ne déborde pas dans les rainures de verrouillage 16, 26 des panneaux assemblés et n'interdise la mise en place des languettes de verrouillage 40 dans les canaux 30 fermés par l'assemblage des coins.

La vue de détail de la figure 7C montre la rainure 52 dans le panneau inférieur 10A qui coupe la rainure de verrouillage 16 le long du bord d'assemblage de ce panneau inférieur 10A.

La figure 7D est une vue du coin inférieur du panneau latéral droit 20A montrant la rainure 52 recevant le bord du panneau de fond 50. Cette rainure 52 ne coupe pas la surface d'appui intérieure 25 du bord du panneau latéral 20A, puisque la rainure 52 pour le bord du fond 50 est à la même profondeur que la rainure 26 recevant la languette de verrouillage 40 et que, comme cela apparaît à la figure 1, la rainure de verrouillage a l'un de ses côtés dans le prolongement de la surface d'appui intérieure 25, du seul fait que la rainure de verrouillage est réalisée par fraisage, ce qui aboutit à cette disposition coplanaire.

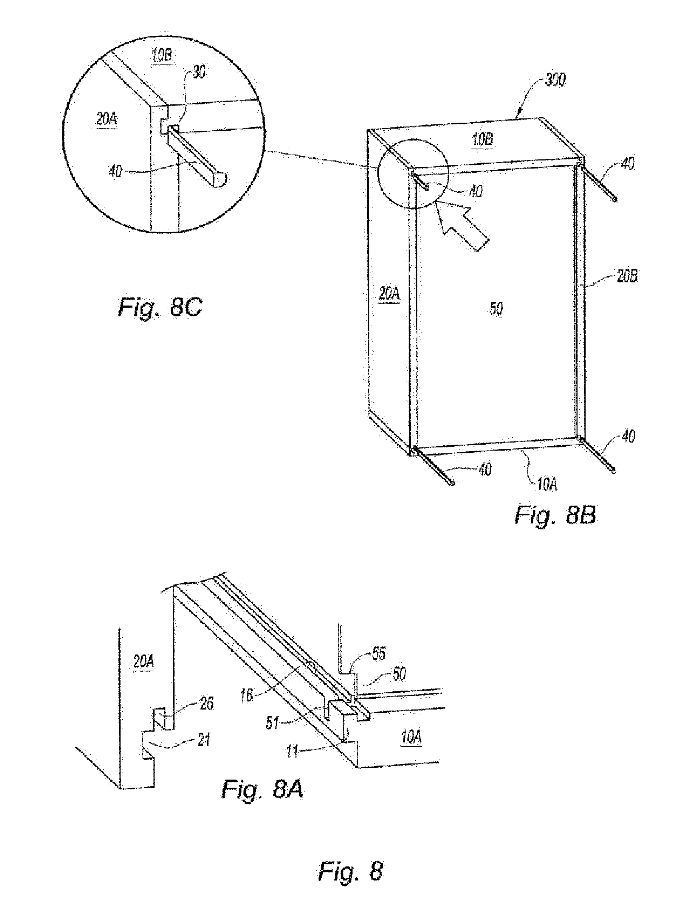

La figure 8 montre dans ses parties 8A-8C, différentes détails de la poursuite de l'assemblage et du verrouillage du caisson 300.

Ainsi, la figure 8A montre la situation au niveau d'un coin inférieur du panneau latéral 20B, le panneau de fond 50 étant engagé dans sa rainure 51 et le coin découpé 55 laisse libre la rainure de verrouillage 16 à la base de la languette bâtarde 11 de ce côté du panneau inférieur 10A. La partie découpée 55 du panneau de fond 50 remonte au-dessus de la surface du panneau inférieur 10A pour ne pas couper la rainure de verrouillage 26 du second panneau 20B représenté à gauche.

La figure 8B montre une vue arrière du caisson 300 dont le fond 50 a été mis dans les rainures 51-54 et les quatre panneaux 10A, B ; 20A, B assemblés par l'engagement de chaque languette bâtarde dans sa rainure respective. Cette figure indique également les languettes de verrouillage 40.

La figure 8C est une vue à échelle agrandie de cette languette de verrouillage 40 face au canal de verrouillage 30. La languette de verrouillage 40 est constituée par une lame d'une certaine épaisseur terminée côté arrière par une languette de préhension 42.

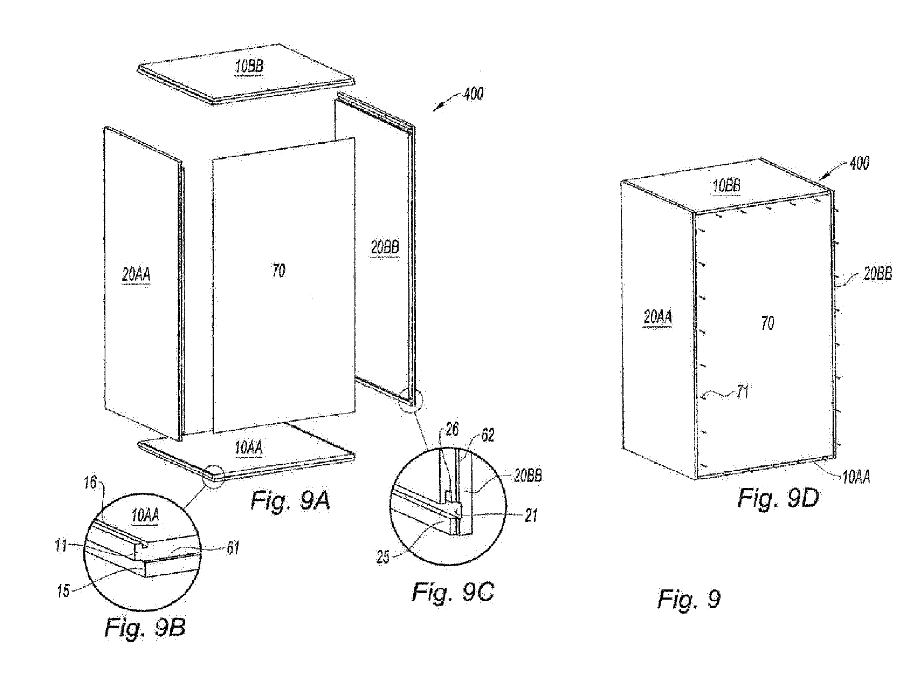

La figure 9 montre dans ses parties 9A-9D, une variante de caisson 400 qui diffère du caisson 300 dit "à rainures" décrit aux figures 7 et 8 par sa feuillure 61-64 recevant le fond 70.

Selon la figure 9A, les quatre panneaux 10AA, 10BB ; 20AA, 20BB destinés à être assemblés, comportent un bord arrière formant une feuillure 61-64 pour recevoir le panneau de fond 70 dont les coins ne sont pas découpés à l'endroit des rainures de verrouillage 16, 26.

La figure 9B montre le détail d'un coin arrière du panneau inférieur 10AA avec la rainure de verrouillage 16 qui débouche à l'arrière au-dessus de la partie formant la feuillure 61 (un dépassement du bord inférieur du panneau).

La figure 9C montre la forme inférieure du panneau latéral montrant la feuillure. Les autres coins des panneaux latéraux et des panneaux inférieurs et supérieurs, ont une structure homologue.

Lorsque les panneaux 10AA-20BB sont assemblés et verrouillés chaque fois par une languette de verrouillage 40, la feuillure 61-64 reçoit le panneau de fond 70 qui est simplement placé dans la feuillure 61-64. Il est fixé à l'aide d'agrafes ou de pointes 71 comme le montre la figure 9D.

Selon un mode de réalisation non représenté, l'une des rainures de verrouillage, par exemple la rainure de verrouillage 26 loge une languette de verrouillage qui ne dépasse pas de l'ouverture de la rainure et après la réunion des deux panneaux, la languette bâtarde 11 étant à fond dans le logement d'assemblage 21, il suffit de faire descendre la languette de verrouillage en la repoussant dans la rainure de verrouillage 16 de l'autre panneau 10, de façon que la rainure constitue un verrou venant à la fois en saillie dans la rainure de verrouillage 16 tout en restant en saillie dans la rainure de verrouillage 26. De façon avantageuse, la languette de verrouillage est de préférence placée dans la rainure de verrouillage 26 qui est parallèle au plan du panneau 20 plutôt que dans la rainure de verrouillage 16 du panneau 10 car alors elle serait perpendiculaire au plan du panneau et une profondeur de rainure de verrouillage 16 trop importante affaiblirait la languette bâtarde 11 ; cela n'est pas le cas pour la rainure de verrouillage 26 qui peut avoir une profondeur beaucoup plus importante sans que cela ne fragilise le futur assemblage.

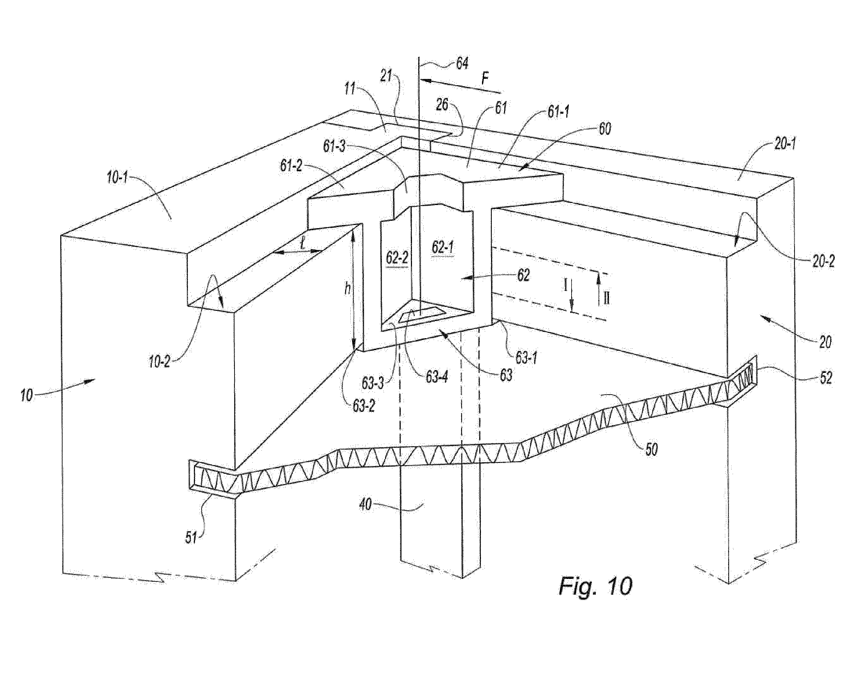

La figure 10 montre un autre mode de réalisation de la languette de verrouillage 40 pour l'assemblage de deux panneaux 10, 20 qui diffère de celui décrit ci-dessus par l'organe de verrouillage 60 porté par l'extrémité arrière de la languette de verrouillage 40 qui, elle, reste identique. Selon ce mode de réalisation, le chant 10-1, 20-1 des deux panneaux 10, 20 est muni d'un décrochage formant une surface d'appui périphérique 10-2, 20-2 sur tous les panneaux 10, 20 au niveau de leur chant 10-1, 20-1, en général le chant du côté arrière du caisson.

Le caisson assemblé est représenté ici couché, en position horizontale.

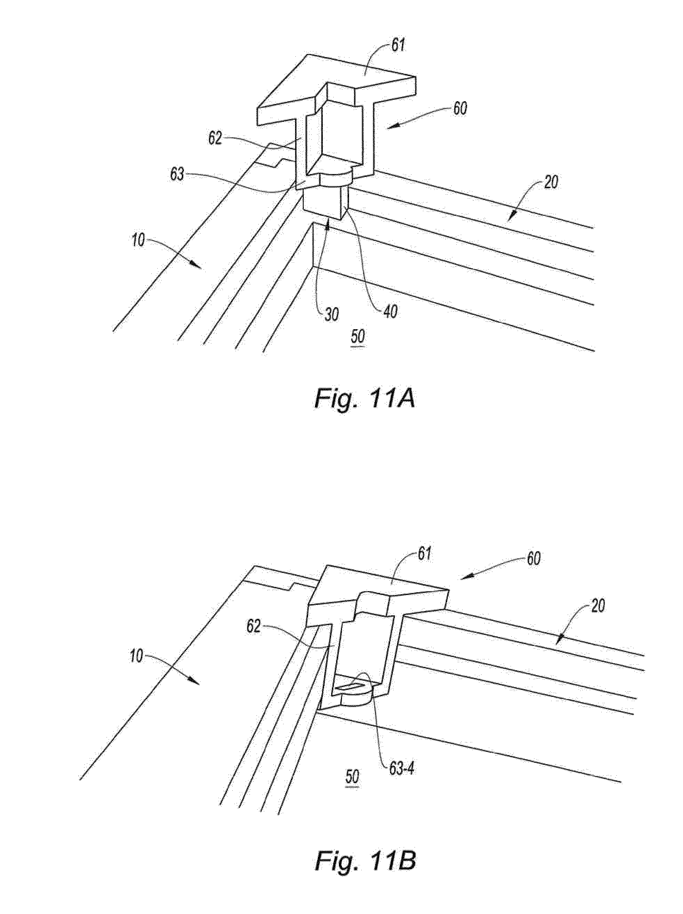

Dans l'exemple des figures 10, 11A, 11B, les chants 10-1, 20-1 avec leur décrochement ont une forme est légèrement différente de ce qui apparaît dans les figures précédentes, par exemple dans la figure 8C. En effet, le décrochement est une partie fraisée qui borde le côté intérieur de chaque panneau de sorte que le canal 30 est coupé et débouche dans la surface d'appui 20-2 (ce débouché n'est pas représenté) et la languette bâtarde 11 est partiellement coupée par le décrochement formant la surface d'appui 20-2. La languette bâtarde 11 et la rainure d'assemblage 21 apparaissent sur le dessus de l'assemblage de la figure 10.

La description de ce mode de réalisation de la languette 40 avec son organe de verrouillage 60 faite pour un coin du caisson s'applique dans les mêmes conditions aux autres coins du caisson.

La languette de verrouillage 40, représentée engagée dans le canal 30 (non représenté) formé par l'assemblage des deux panneaux 10, 20, est munie à son extrémité supérieure correspondant au côté arrière de la languette, d'un organe d'accrochage qui vient se loger dans le dièdre formé par l'assemblage des deux panneaux et s'accrocher d'une part en s'appuyant sur le chant 10-1, 20-1, c'est-à-dire ici la surface d'appui 10-2, 20-2 du décrochage et d'autre part, en venant s'engager par des lamelles d'accrochage 63-1 dans la rainure 51, 52 (53, 54) périphérique réalisée dans les panneaux 10, 20 pour recevoir les bords du fond 50 du caisson.

De façon plus détaillée, l'organe de verrouillage 60 selon cet exemple de réalisation est constitué par une grande base 61 en forme d'équerre pour s'appuyer sur le chant 10-1, 20-1 des panneaux 10, 20, ici sur les surfaces d'appui 10-2, 20-2 réalisées par les décrochements des chants 10-1, 20-1. Cette grande base 61 est reliée à l'extrémité supérieure (selon l'orientation de cette figure) de la languette de verrouillage 40 ; cette extrémité supérieure est en général l'extrémité arrière de la languette puisque les chants 10-1, 20-1 correspondent au côté arrière du caisson par où on introduit les languettes de verrouillage 40.

La grande base 61 est munie d'une partie de liaison 62 en forme de dièdre venant s'appuyer contre les faces intérieures des panneaux 10, 20 sous les surfaces d'appui 10-2, 20-2. Cette partie de liaison en forme de dièdre 62 a une hauteur (h) correspondant sensiblement à la distance séparant le chant 10-1, 20-1 (ou ici la surface d'appui 10-2, 20-2) du bord de la rainure 51, 52. L'extrémité de cette partie de liaison 62 porte une petite base 63 de forme triangulaire, barrant le fond du dièdre et se prolongeant au-delà de la partie de liaison 62 par deux lamelles d'accrochage 63-1 en saillie venant dans la rainure 51, 52 des panneaux 10, 20 au-dessus du fond 50.

La rainure périphérique 51-54 est en général suffisamment large pour que le fond 50 puisse s'y loger facilement et l'espace libre est alors occupé par les lamelles d'accrochage 63-1, 63-2 des deux côtés 62-1, 62-2 de la partie de liaison en forme de dièdre 62. La petite base 63 occupe ici l'intérieur du dièdre par une partie intérieure 63-3 munie d'une encoche 63-4 de façon à permettre le dégagement de l'organe de verrouillage 60 et l'extraction de la languette de verrouillage 40.

Pour ce déverrouillage, on utilise un outil schématisé par la ligne 64, représentant un outil faisant levier tel qu'un tournevis dont on introduit l'extrémité « inférieure dans l'encoche 63-4 et que l'on appuie contre le bord de la grande base 61 pour effectuer un mouvement de levier en poussant selon la flèche F, pour extraire les lamelles d'accrochage 63-1 de la rainure 51, 52 et permettre ainsi de tirer l'organe de verrouillage 60 vers le haut avec la languette de verrouillage 40. Pour guider l'outil 64 et éviter qu'il ne glisse d'un côté ou de l'autre contre le grand côté de la grande base 61, il est prévu une découpe 61-3. Ce mouvement de déverrouillage est un pivotement de la partie de liaison 62 autour de sa jonction avec la grande base 61 ou même un pivotement de l'ensemble de l'organe de verrouillage 60 autour de sa liaison avec l'extrémité de la languette de verrouillage 40 ou encore une déformation élastique de ces éléments en jouant dans les différents cas sur une certaine souplesse de la matière.

Comme représenté à la figure 10, l'organe de verrouillage 60 se compose d'une grande base 61 en équerre dont le côté 61-1 est relié à la languette de verrouillage 40 alors que l'autre côté 61-2 est libre. De même, la partie de liaison en forme de dièdre 62 est constituée de deux parois 62-1, 62-2 mais selon une variante non représentée, l'organe de verrouillage pourrait se limiter à la seule paroi 62-1 de la partie de liaison en forme de dièdre reliée à la grande base 61, elle-même limitée pratiquement à son côté 61-1. Il en serait de même de la petite base 63 limitée à son seul côté avec la lamelle 63-1 homologue au côté 61-1 de la grande base 61. Dans ce cas également, l'organe de verrouillage serait en appui sur le chant 20-1 du panneau 20 ou de sa surface d'appui 20-2 selon l'exemple représenté et sa lamelle 63-1 viendrait dans la rainure 52 au-dessus du fond 50 pour bloquer la languette de verrouillage 40.

De façon avantageuse, pour caler l'organe de verrouillage 60, les côtés 61-1, 61-2 de la grande base 61 dépassent de la partie de liaison 62 d'une longueur sensiblement égale à la largeur (ℓ) des surfaces d'appui 10-2, 20-2.

La mise en place de la languette de verrouillage 40 avec son organe de verrouillage 60 est montrée par deux étapes aux figures 11A, 11B.

La figure 11A montre l'introduction de la languette de verrouillage 40 dans le canal 30, l'extrémité de la languette 40 étant encore à l'extérieur de l'assemblage des panneaux 10, 20. Puis en continuant d'enfoncer la languette 40, on écarte légèrement l'organe de verrouillage 60 et on le fait glisser par le bord de ses deux lamelles d'accrochage contre la surface intérieure des deux panneaux 10, 20 jusqu'à ce que les lamelles 63-1, 63-2 arrivent devant la rainure 51, 52 des deux panneaux 10, 20 au-dessus du fond 50 et puissent s'y engager. Dans cette position, le dessous des côtés 61-1, 61-2 de la grande base 61 qui dépassent des côtés 62-1, 62-2 de l'organe de partie de liaison 62 est alors en appui sur les surfaces d'appui 10-2, 20-2. L'organe de verrouillage 60 constitue ainsi à la fois une cale pour le fond 50 et un moyen de verrouillage de la languette de verrouillage 40 pour que celle-ci ne puisse s'échapper vers l'arrière (côté des chants 10-1, 20-1) sous l'effet des mouvements ou des vibrations auxquels le caisson pourrait être soumis.

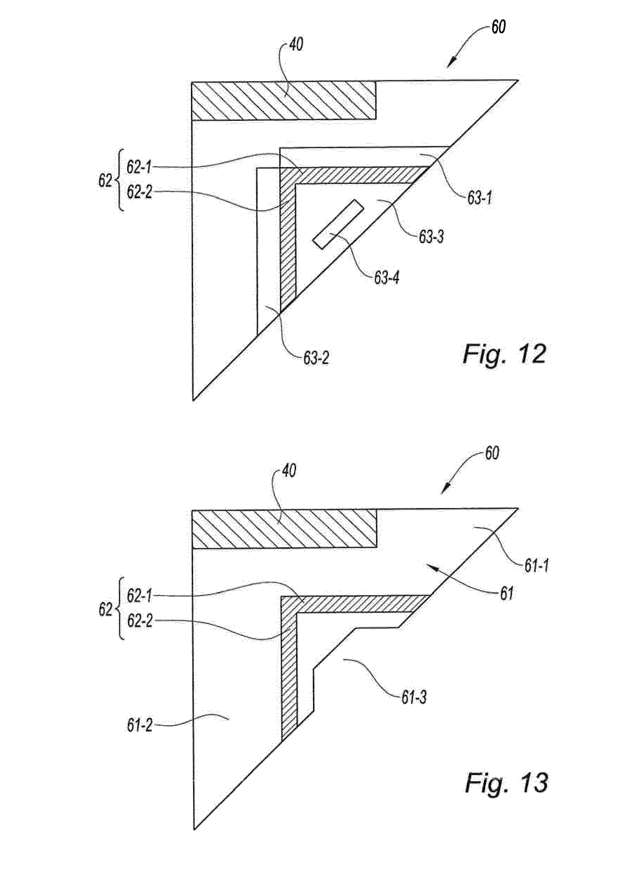

La vue en coupe de la figure 12 met en évidence la partie de liaison 62 en forme de dièdre avec sa petite base 63 se prolongeant côté « extérieur » par les lamelles d'accrochage 63-1, 63-2. Cette figure montre également la partie intérieure 63-3 avec l'encoche 63-4 ainsi que la languette de verrouillage 40, coupée par le plan I.

Le triangle tracé en trait interrompu est le contour de la grande base 61 qui n'apparaît pas dans cette vue en coupe de dessus.

La figure 13 est une vue en coupe de dessous selon le plan II montrant la partie de liaison en forme de dièdre 62, coupée, de même que la languette de verrouillage 40. La grande base 61 avec ses deux côtés 61-1, 61-2 apparaît ainsi que l'encoche 63-4.

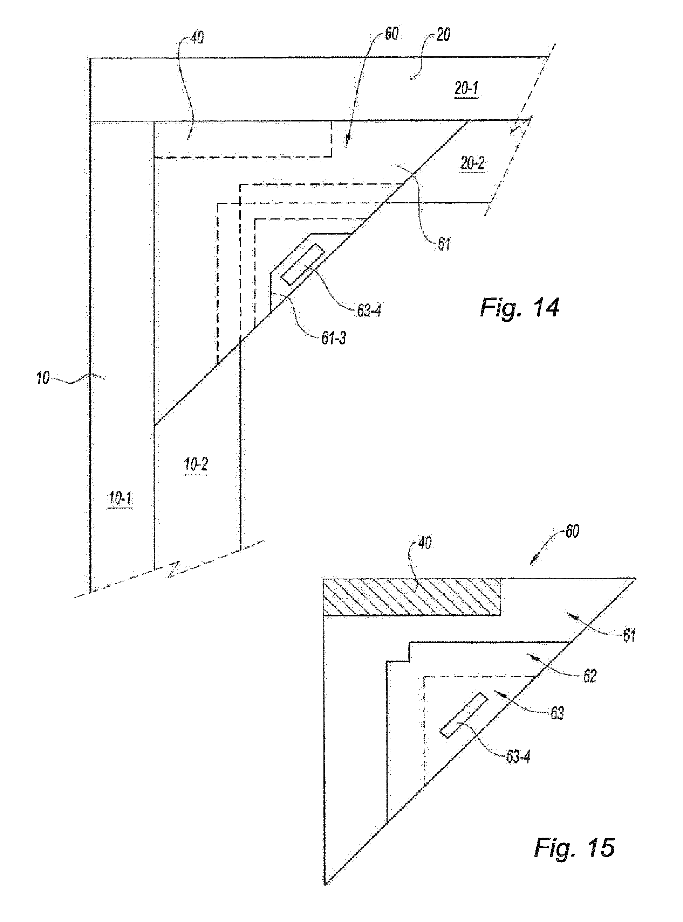

La figure 14 est une vue de dessus de l'assemblage montrant par transparence les différents éléments déjà décrits ci-dessus. L'encoche 63-4 apparaît du fait de la découpe 61-3 réalisée dans la grande base 61.

La figure 15 est une vue de dessous de la languette de verrouillage 40 avec son organe de verrouillage 60.

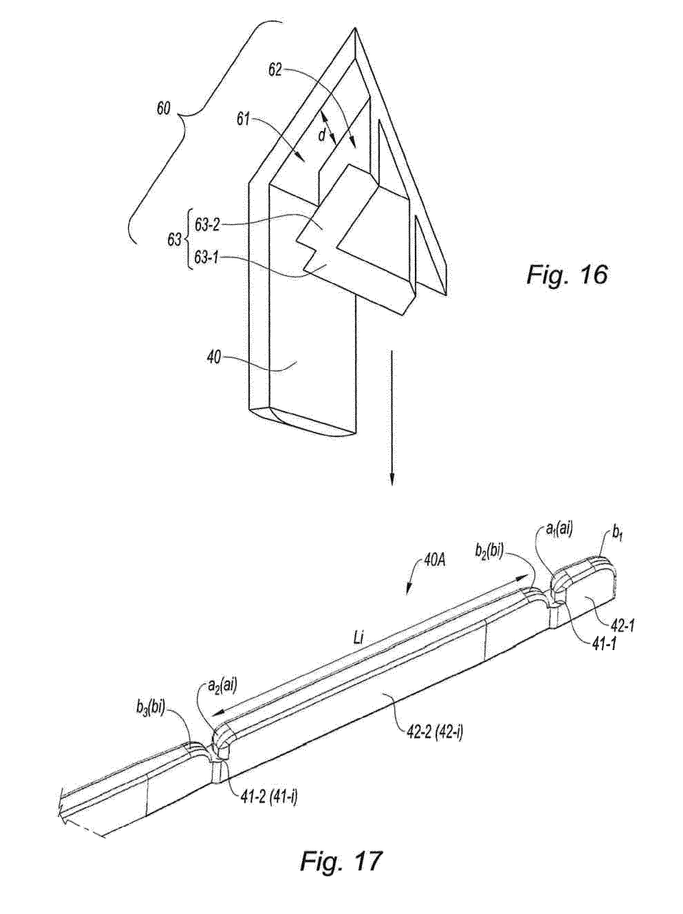

La figure 16 est une variante de la languette de verrouillage 40 et de son organe de verrouillage 60 dans lequel la petite base 63 ne comporte pas de partie intérieure 63-3 ni d'encoche 63-4, les autres parties identiques aux précédentes portent les mêmes références.

Selon la figure 17, la languette 40A est une languette fractionnable de manière à pouvoir facilement adapter sa longueur à la profondeur du caisson à partir d'une languette de longueur uniforme.

Cette languette est subdivisée par des réductions locales de section 41-1, 41-2 (41-i) réparties régulièrement ou irrégulièrement sur la longueur de base de la languette 40A et définissant des segments (42-1, 42-2...42-i) de longueur Li égale ou différente pour la meilleure adaptation à la profondeur d'un caisson.

Les segments ainsi délimités ont une longueur Li et les réductions de section 41-i sont constituées par des encoches réalisées par moulage de la languette 40A.

Les réductions de section 41-i ont des surfaces arrondies A1B1 (AiBi) de façon à éviter tout accrochage dans le canal formé par l'assemblage des deux panneaux du caisson recevant la languette.

### NOMENCLATURE

- 10: premier panneau
- 10A: paroi inférieure
- 10B: paroi supérieure
- 10AA: paroi inférieure
- 10BB 106B: paroi supérieure paroi supérieure
- 10a: face intérieure
- 10b: face extérieure
- 10-1: chant
- 10-2: surface d'appui
- 11: languette bâtarde
- 12: face avant de la languette
- 13: surface d'appui latérale
- 14: surface d'appui latérale
- 15: surface d'appui de chant
- 16: rainure de verrouillage
- 20: deuxième panneau
- 20a: face intérieure
- 20b: face extérieure
- 20A, 20B: paroi latérale
- 20AA, 20BB: paroi latérale
- 20-1: chant
- 20-2: surface d'appui
- 21: rainure d'assemblage
- 22: fond de la rainure
- 23: grande surface d'appui
- 23a: partie de la grande surface d'appui
- 23b: partie de la grande surface d'appui
- 24: petite surface d'appui
- 25: surface d'appui intérieure
- 26: rainure de verrouillage
- 30: canal
- 40: languette de verrouillage
- 41: extrémité avant de la languette
- 42: patte d'extrémité arrière
- 50: fond du caisson
- 51-54: rainure pour le fond
- 60: organe de verrouillage
- 61: grande base
- 61-1: côté
- 61-2: côté
- 61-3: découpe
- 62: partie de liaison en forme de dièdre
- 62-1: côté
- 62-2: côté
- 63: petite base
- 63-1: lamelle d'accrochage
- 63-2: lamelle d'accrochage
- 63-3: partie intérieure
- 63-4: encoche
- 71: pointe, agrafe
- 100: panneau
- 200: panneau
- 211: languette
- 221: rainure
- 130: panneau
- 230: panneau
- 240: accessoires d'assemblage
- 300: caisson à fond en rainure
- 400: caisson à fond en feuillure

## Revendications

1. Caisson de meuble formé de panneaux assemblés bord à bord selon un assemblage à rainure et languette bâtarde dans lequel,
- un premier et un second panneau sont assemblés par le chant du premier panneau venant contre le bord intérieur du deuxième panneau formant ainsi un dièdre, le premier panneau ayant une première orientation (X) et le second panneau ayant une seconde orientation (Y) dans le plan perpendiculaire à la direction de l'arête du dièdre formé par l'assemblage,caisson de meuble **caractérisé en ce que**
A. le premier panneau (10) comporte sur son chant, en bordure de son côté intérieur, une languette bâtarde d'assemblage (11), laissant une surface d'appui de chant (15) avancée (A), etune rainure de verrouillage (16) à la base de la languette (11) le long du bord intérieur (10a) de ce panneau (10),
B. le second panneau (20) comporte le long de son bord intérieur (20a) un logement (21,25) de forme complémentaire à celle du chant (11, 15) du premier panneau (10) avec d'une part une rainure d'assemblage (21), longitudinale, de forme complémentaire à celle de la languette (11), et d'autre part une surface d'appui extérieure (25) au-delà de la rainure (21) et en retrait (R) par rapport au plan du côté intérieur du second panneau (20) pour recevoir la surface d'appui de chant (15) de l'autre panneau (10),
C. une rainure de verrouillage (26) dans le second panneau (10) débouchant dans le logement d'assemblage (21) dans une position complémentaire à celle de la rainure de verrouillage (16) du premier panneau (10) lorsque les deux panneaux (10, 20) sont assemblés, la languette bâtarde (11) du premier panneau (10) venant dans le logement d'assemblage (21) du second panneau (20) et la surface d'appui de chant (15) avancée (A) du premier panneau (10) étant appliquée contre la surface d'appui extérieure (25) en retrait (R) du deuxième panneau (20), les rainures de verrouillage (16, 26) se complétant pour former un canal (30) recevant une languette de verrouillage (40), la réunion de la languette bâtarde (11) et de la rainure d'assemblage (21) assurant le blocage dans la seconde direction (Y) et la languette de verrouillage (30) bloquant l'assemblage dans la première direction (X).

2. Caisson de meuble selon la revendication 1,
**caractérisé en ce que**
les rainures de verrouillage (16, 26) débouchent seulement d'un côté des panneaux (10, 20).

3. Caisson de meuble selon la revendication 1,
**caractérisé en ce que**
les rainures de verrouillage (16, 26) sont de section rectangulaire et la languette de verrouillage (40) a une section rectangulaire égale, au jeu près, à celle du canal (30) formé par la réunion des deux rainures de verrouillage (16, 26).

4. Caisson de meuble selon la revendication 1,
**caractérisé en ce que**
la languette de verrouillage (40) se termine par une patte (42) formant un appui arrière et une butée de fin de course d'engagement de la languette de verrouillage (40) dans le canal (30).

5. Caisson de meuble selon la revendication 1,
**caractérisé en ce que**
les rainures de verrouillage (16, 26) ont une section rectangulaire et la languette de verrouillage (40) a une section au plus égale, au jeu près, à celle d'une rainure (16, 26) pour être placée dans cette rainure avant l'assemblage des panneaux (10, 20) sans dépasser de la rainure et être ensuite poussée à cheval sur la jonction des deux rainures (16, 26) formant le canal (30) après l'assemblage des panneaux (10, 20) pour verrouiller leur assemblage.

6. Caisson de meuble selon la revendication 5,
**caractérisé en ce que**
la languette de verrouillage (40) a une section égale, au jeu près, à celle de la seconde rainure de verrouillage débouchant dans la rainure d'assemblage (21) du second panneau (20).

7. Caisson de meuble selon la revendication 1,
**caractérisé en ce qu'**
il comporte un fond (50) logé dans des rainures périphériques (51-54) réalisées près du bord arrière des panneaux et les coins du fond (50) comportent des découpes (55) pour ne pas couvrir le canal (40) formé par la réunion des rainures (16, 26) au niveau de chaque coin du caisson.

8. Caisson de meuble selon la revendication 1,
**caractérisé en ce que**
la languette de verrouillage (40) est terminée par un organe de verrouillage (60) accroché à l'extrémité du dièdre du caisson formé par l'assemblage de deux panneaux (10, 20) en s'appuyant sur le chant (10-2, 20-2) et en se logeant dans la rainure (51-54) des panneaux recevant les bords du fond (50) pour immobiliser la languette de verrouillage (40).

9. Caisson de meuble selon la revendication 8,
**caractérisé en ce que**
l'organe de verrouillage (60) comporte une grande base (61) en forme d'équerre pour s'appuyer à plat sur le chant (10-1, 20-1) des panneaux (10, 20) à leur jonction formant le dièdre d'assemblage, cette grande base (61) solidaire de la languette de verrouillage (40) étant prolongée par une partie de liaison en forme de dièdre (62) venant se caler contre la face intérieure de la jonction en forme de dièdre des panneaux (10, 20) et portant une petite base (63) avec des lamelles d'accrochage (63-1, 63-2), en saillie, venant dans la rainure périphérique (51-54) recevant les bords du fond (50).

10. Caisson de meuble selon la revendication 9,
**caractérisé en ce que**
la petite base (63) de forme triangulaire forme un fond (63-3) dans l'intérieur du dièdre de la partie de liaison (62) et comporte une encoche de manoeuvre (63-4).

11. Caisson de meuble selon la revendication 9,
**caractérisé en ce que**
la grande base (61) déborde de la partie de liaison en forme de dièdre (62) d'une largeur (ℓ) correspondant à la largeur de la surface d'appui (10-2, 20-2) du décrochement réalisé dans le chant (10-1, 20-1) des panneaux (10, 20).

12. Caisson de meuble selon la revendication 1,
**caractérisé en ce que**
la languette de verrouillage (40A) est fractionnable pour être adaptée à la profondeur du caisson.

13. Caisson de meuble selon la revendication 12,
**caractérisé en ce que**
la languette de verrouillage (40A), fractionnable, est subdivisée par des réductions locales de section (41-i) délimitant des segments (42-i), notamment de longueurs différentes.

## Patentansprüche

1. Möbelstückkorpus, gebildet durch Platten, die Rand an Rand durch eine Verbindung mittels Nut und falscher Feder miteinander verbunden sind, wobei:
- eine erste und eine zweite Platte derart miteinander verbunden werden, dass die Kante der ersten Platte am inneren Rand der zweiten Platte zu liegen kommt, wodurch ein Dieder gebildet wird, wobei die erste Platte eine erste Ausrichtung (X) und die zweite Platte eine zweite Ausrichtung (Y) in der Ebene senkrecht zur Richtung der Kante des Dieders aufweist, der durch die Verbindung gebildet wird, wobei der Möbelstückkorpus **dadurch gekennzeichnet ist, dass**
A. die erste Platte (10) an ihrer Kante entlang ihrer Innenseite Folgendes aufweist: eine falsche Verbindungsfeder (11), die eine vorgeschobene (A) Kantenauflagefläche (15) bildet, und eine Verriegelungsnut (16) an der Basis der Feder (11) entlang des inneren Rands (10a) dieser Platte (10),
B. die zweite Platte (20) entlang ihres inneren Rands (20a) eine Aufnahme (21, 25) aufweist, deren Form komplementär zu jener der Kante (11, 15) der ersten Platte (10) ist und die Folgendes umfasst: einerseits eine längslaufende Verbindungsnut (21), deren Form komplementär zu jener der Feder (11) ist, und andererseits eine äußere Auflagefläche (25), die über die Nut (21) hinausgeht und in Bezug auf die Innenseite der zweiten Platte (20) zurückspringt (R), um die Kantenauflagefläche (15) der anderen Platte (10) aufzunehmen,
C. eine Verriegelungsnut (26) in der zweiten Platte (10) in die Verbindungsaufnahme (21) mündet, und zwar in einer Position, die komplementär zu jener der Verriegelungsnut (16) der ersten Platte (10) ist, wenn die zwei Platten (10, 20) miteinander verbunden sind, wobei die falsche Feder (11) der ersten Platte (10) in die Verbindungsaufnahme (21) der zweiten Platte (20) eingefügt wird und die vorgeschobene (A) Kantenauflagefläche (15) der ersten Platte (10) an der zurückspringenden (R) äußeren Auflagefläche (25) der zweiten Platte (20) anliegt, wobei die Verriegelungsnuten (16, 26) einander ergänzen, um einen Kanal (30) zu bilden, der eine Verriegelungfeder (40) aufnimmt, wobei das Zusammenfügen der falschen Feder (11) und der Verbindungsnut (21) die Blockierung in der zweiten Richtung (Y) gewährleistet und die Verriegelungfeder (30) die Verbindung in der ersten Richtung (X) blockiert.

2. Möbelstückkorpus nach Anspruch 1,
**dadurch gekennzeichnet, dass**
die Verriegelungsnuten (16, 26) nur an einer Seite der Platten (10, 20) münden.

3. Möbelstückkorpus nach Anspruch 1,
**dadurch gekennzeichnet, dass**
die Verriegelungsnuten (16, 26) einen rechteckigen Querschnitt aufweisen und die Verriegelungfeder (40) einen rechteckigen Querschnitt aufweist, der bis auf ein Spiel gleich jenem des Kanals (30) ist, der durch die Verbindung der zwei Verriegelungsnuten (16, 26) gebildet wird.

4. Möbelstückkorpus nach Anspruch 1,
**dadurch gekennzeichnet, dass**
die Verriegelungfeder (40) mit einer Klaue (42) endet, die eine hintere Auflage und einen Anschlag für das Ende der Bewegung beim Einfügen der Verriegelungfeder (40) in den Kanal (30) bildet.

5. Möbelstückkorpus nach Anspruch 1,
**dadurch gekennzeichnet, dass**
die Verriegelungsnuten (16, 26) einen rechteckigen Querschnitt aufweisen und die Verriegelungfeder (40) einen Querschnitt aufweist, der bis auf ein Spiel höchstens gleich jenem einer Nut (16, 26) ist, um vor der Verbindung der Platten (10, 20) in dieser Nut angeordnet zu werden, ohne aus der Nut herauszuragen, und um anschließend nach der Verbindung Platten (10, 20) auf übergreifende Weise über die Verbindung der zwei Nuten (16, 26) geschoben zu werden, die den Kanal (30) bilden, um ihre Verbindung zu verriegeln.

6. Möbelstückkorpus nach Anspruch 5,
**dadurch gekennzeichnet, dass**
die Verriegelungfeder (40) einen Querschnitt aufweist, der bis auf ein Spiel gleich jenem der zweiten Verriegelungsnut ist, die in die Verbindungsnut (21) der zweiten Platte (20) mündet.

7. Möbelstückkorpus nach Anspruch 1,
**dadurch gekennzeichnet, dass**
er einen Boden (50) aufweist, der in Umfangsnuten (51-54) eingreift, die in der nähe des hinteren Rands der Platten gebildet sind, und dass die Ecken des Bodens (50) Ausschnitte (55) umfassen, um den Kanal nicht (40) zu bedecken, der durch die Verbindung der Nuten (16, 26) im Bereich jeder Ecke des Korpus gebildet wird.

8. Möbelstückkorpus nach Anspruch 1,
**dadurch gekennzeichnet, dass**
die Verriegelungfeder (40) mit einem Verriegelungsorgan (60) endet, das am Ende des Dieders des Korpus befestigt ist, der durch die Verbindung der zwei Platten (10, 20) gebildet ist, wobei es auf der Kante (10-2, 20-2) aufliegt und in die Nut (51-54) der Platten eingreift, die die Ränder des Bodens (50) aufnimmt, um die Verriegelungfeder (40) zu immobilisieren.

9. Möbelstückkorpus nach Anspruch 8,
**dadurch gekennzeichnet, dass**
das Verriegelungsorgan (60) eine große Basis (61) in Form eines Winkels aufweist, um waagrecht auf der Kante (10-1, 20-1) der Platten (10, 20) aufzuliegen, wo diese miteinander verbunden sind, um den Dieder der Verbindung zu bilden, wobei diese große Basis (61), die mit der Verriegelungfeder (40) fest verbunden ist, durch ein diederförmiges Verbindungsstück (62) verlängert wird, das an die Innenseite der diederförmigen Verbindung der Platten (10, 20) gepresst ist und eine kleine Basis (63) mit vorspringenden Einrastblättern (63-1, 63-2) trägt, die in die Umfangsnut (51-54) eingreifen, welche die Ränder des Bodens (50) aufnimmt.

10. Möbelstückkorpus nach Anspruch 9,
**dadurch gekennzeichnet, dass**
die dreieckige kleine Basis (63) einen Boden (63-3) im Inneren des Dieders des Verbindungsstücks (62) bildet und einen Handhabungsausschnitt (63-4) aufweist.

11. Möbelstückkorpus nach Anspruch 9,
**dadurch gekennzeichnet, dass**
die große Basis (61) vom diederförmigen Verbindungsstück (62) um eine Breite (ℓ) vorragt, die der Breite der Auflagefläche (10-2, 20-2) der Stufe entspricht, die in der Kante (10-1, 20-1) der Platten (10, 20) gebildet ist.

12. Möbelstückkorpus nach Anspruch 1,
**dadurch gekennzeichnet, dass**
die Verriegelungfeder (40A) teilbar ist, um an die Tiefe des Korpus angepasst werden zu können.

13. Möbelstückkorpus nach Anspruch 12,
**dadurch gekennzeichnet, dass**
die teilbare Verriegelungfeder (40A) durch lokale Querschnittverminderungen (41-i) unterteilt wird, die Segmente (42-i), insbesondere mit unterschiedlichen Längen, begrenzen.

## Claims

1. Furniture carcass formed of panels which are assembled edge to edge according to a barefaced tongue and groove assembly, wherein:
- a first and a second panel are assembled by placing the narrow edge of the first panel against the inside face of the second panel, thus forming a dihedron, the first panel having a first orientation (X) and the second panel having a second orientation (Y) in the plane perpendicular to the direction of the edge of the dihedron formed by the assembly, which furniture carcass is **characterised in that**
A. the first panel (10) has on its narrow edge, on the edge of its inner side, a barefaced assembly tongue (11), leaving a forward (A) narrow-edge bearing surface (15), and a locking groove (16) at the base of the tongue (11) along the inside face (10a) of the panel (10),
B. the second panel (20) has along its inside face (20a) a housing (21, 25) of a shape which is complementary to that of the narrow edge (11, 15) of the first panel (10), having on the one hand a longitudinal assembly groove (21) of a shape which is complementary to that of the tongue (11) and on the other hand an outer bearing surface (25) beyond the groove (21) and set back (R) relative to the plane of the inner side of the second panel (20) for receiving the narrow-edge bearing surface (15) of the other panel (10),
C. a locking groove (26) in the second panel (10) opening into the assembly housing (21) in a position complementary to that of the locking groove (16) of the first panel (10) when the two panels (10, 20) are assembled, the barefaced tongue (11) of the first panel (10) entering the assembly housing (21) of the second panel (20) and the forward (A) narrow-edge bearing surface (15) of the first panel (10) being applied against the set-back (R) outside bearing surface (25) of the second panel (20), the locking grooves (16, 26) complementing each other to form a channel (30) which receives a locking strip (40), the meeting of the barefaced tongue (11) and the assembly groove (21) effecting blocking in the second direction (Y) and the locking strip (30) blocking the assembly in the first direction (X).

2. Furniture carcass according to claim 1,
**characterised in that**
the locking grooves (16, 26) open on only one side of the panels (10, 20).

3. Furniture carcass according to claim 1,
**characterised in that**
the locking grooves (16, 26) are of rectangular cross-section, and the locking strip (40) has a rectangular cross-section which is equal, allowing for play, to that of the channel (30) formed by the meeting of the two locking grooves (16, 26).

4. Furniture carcass according to claim 1,
**characterised in that**
the locking strip (40) terminates in a foot (42) which forms a rear support and a stop for limiting the engagement of the locking strip (40) in the channel (30).

5. Furniture carcass according to claim 1,
**characterised in that**
the locking grooves (16, 26) have a rectangular cross-section and the locking strip (40) has a cross-section which is equal at most, allowing for play, to that of one groove (16, 26) in order to be placed **in that** groove before the panels (10, 20) are assembled without protruding from the groove and then pushed so that it straddles the junction of the two grooves (16, 26) forming the channel (30) after the panels (10, 20) have been assembled, in order to lock the assembly.

6. Furniture carcass according to claim 5,
**characterised in that**
the locking strip (40) has a cross-section which is equal, allowing for play, to that of the second locking groove which opens into the assembly groove (21) of the second panel (20).

7. Furniture carcass according to claim 1,
**characterised in that**
it comprises a bottom (50) housed in peripheral grooves (51-54) formed close to the rear face of the panels, and the corners of the bottom (50) have cut-outs (55) in order not to cover the channel (40) formed by the meeting of the grooves (16, 26) at each corner of the carcass.

8. Furniture carcass according to claim 1,
**characterised in that**
the locking strip (40) is terminated by a locking member (60) fitted to the end of the dihedron of the carcass formed by the assembly of two panels (10, 20) by resting on the narrow edge (10-2, 20-2) and being housed in the groove (51-54) of the panels receiving the edges of the bottom (50) in order to immobilise the locking strip (40).

9. Furniture carcass according to claim 8,
**characterised in that**
the locking member (60) comprises a large base (61) in the form of a right-angled element for resting flat on the narrow edge (10-1, 20-1) of the panels (10, 20) at their junction forming the assembly dihedron, the large base (61) integral with the locking strip (40) being extended by a connection portion in the form of a dihedron (62), which sits against the inside face of the dihedron-shaped junction of the panels (10, 20), and carrying a small base (63) with projecting attachment tabs (63-1, 63-2) which fit into the peripheral groove (51-54) receiving the edges of the bottom (50).

10. Furniture carcass according to claim 9,
**characterised in that**
the small base (63) of triangular shape forms a bottom (63-3) inside the dihedron of the connecting part (62) and comprises a manoeuvring notch (63-4).

11. Furniture carcass according to claim 9,
**characterised in that**
the large base (61) extends beyond the connecting part in the form of a dihedron (62) by a width (ℓ) corresponding to the width of the bearing surface (10-2, 20-2) of the step formed in the narrow edge (10-1, 20-1) of the panels (10, 20).

12. Furniture carcass according to claim 1,
**characterised in that**
the locking strip (40A) can be split in order to be adapted to the depth of the carcass.

13. Furniture carcass according to claim 12,
**characterised in that**
the locking strip (40A), which can be split, is subdivided by local reductions in cross-section (41-i) which delimit segments (42-i), especially of different lengths.
